# FASCICULE DE BREVET EUROPEEN

(11) **EP 1 299 251 B1**
(45) Date de publication et mention de la délivrance du brevet: **15.12.2004**
(21) Numéro de dépôt: 01962780.1
(22) Date de dépôt: 25.06.2001
(51) Int. Cl.: B60B 3/04, B21D 53/26

(54) **ROUE POUR VEHICULE A ASSEMBLAGE SOUS SIEGE**
FAHRZEUGRAD MIT MONTAGE UNTER DEM FELGENSITZ
VEHICLE WHEEL ASSEMBLED BENEATH THE SEAT

(30) Priorité: 29.06.2000 FR 0008449
(43) Date de publication de la demande: 09.04.2003
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: GUIMARD, Bruno, F-63400 Chamalieres (FR); ALFF, Denis, F-63200 Riom (FR)
(74) Mandataire: Dequire, Philippe
(86) Numéro de dépôt international: PCT/EP2001/007226
(87) Numéro de publication internationale: WO 2002/000450

(56) Documents cités:
- EP-A- 0 464 449
- EP-A- 0 761 476
- WO-A-98/51518
- WO-A-99/33594
- FR-A- 2 515 115
- US-A- 5 295 304
- US-A- 5 694 687

## Description

L'invention a pour objet une roue destinée aux véhicules automobiles comportant un disque et une jante en tôle métallique dont l'assemblage est réalisé sous le siège extérieur de la jante.

Le brevet EP 0 464 449 présente une telle roue comportant une jante en tôle métallique avec un crochet extérieur et un crochet intérieur, un siège extérieur avec une paroi radialement extérieure tronconique et un siège intérieur, une gorge de montage, un disque avec une portée moyeu, un bord radialement extérieur destiné à l'assemblage avec la jante et une zone de liaison, l'assemblage entre la jante et le disque étant réalisé entre la paroi radialement intérieure du siège extérieur de la jante et la paroi radialement extérieure du bord du disque. Cette roue est telle que la liaison entre le disque et la jante est constituée par un cordon de soudure continu disposé entre le disque et la jante, du côté axialement extérieur et telle que le cordon de soudure a subi une opération de finition par enlèvement de matière de sorte que l'état de surface du cordon de soudure assure la continuité de forme visuelle entre le disque et la jante. L'impression visuelle produite par une telle roue est proche d'une roue « full face », dans laquelle il y a continuité du disque jusqu'au crochet extérieur de la jante. Une telle roue full face est par exemple présentée à la figure 11 de la demande WO 99/33594.

EP 0 761 476 présente une autre roue avec un assemblage réalisé sous le siège extérieur de la jante correspondant au préambule de la revendication 1.

L'assemblage entre le disque et la jante de telles roues est réalisé entre deux zones coniques : la paroi radialement intérieure du siège extérieur de la jante et la paroi radialement extérieure du bord d'assemblage du disque. Pour garantir une bonne tenue de la liaison entre le disque et la jante, il est important de contrôler l'effort de serrage entre le disque et la jante. On entend par effort de serrage, l'ensemble des efforts qui se développent entre les parties en contact du disque et de la jante lors de l'emboîtage et qui sont liés aux différences de diamètres entre les deux parois en contact.

Comme cet assemblage est réalisé sur des parties coniques, le serrage est directement fonction de la cote de déport de la jante, c'est-à-dire de la position axiale du plan médian de la jante relativement à la portée moyeu du disque. En conséquence, l'emboîtage conique rend complexe la maîtrise simultanée dans des conditions de fabrication industrielle de la cote de déport et du serrage.

WO 98/51518 présente une roue full face correspondant au préambule de la revendication 11. L'assemblage entre le disque et la jante de cette roue présente le même problème que pour les roues précédentes.

US 5 694 687 décrit un procédé de fabrication d'une roue par assemblage d'un disque fabriqué notamment par des opérations successives d'embouteillage et d'une jante.

L'invention a pour objet une roue pour véhicule automobile comportant une jante en tôle métallique avec un crochet extérieur et un crochet intérieur, un siège extérieur avec une paroi radialement extérieure tronconique d'inclinaison α relativement à l'axe de rotation de la roue et un siège intérieur, une gorge de montage, un disque en tôle métallique avec une portée moyeu, un bord radialement extérieur destiné à l'assemblage avec ladite jante et une zone de liaison, l'assemblage entre la jante et le disque étant réalisé entre la paroi radialement intérieure du siège extérieur de la jante et la paroi radialement extérieure du bord du disque. Cette roue est caractérisée en ce que le bord radialement extérieur du disque est cylindrique et en ce que la paroi radialement intérieure du siège extérieur de ladite jante est cylindrique.

Cette roue présente l'avantage d'avoir un assemblage disque jante sous le siège extérieur de la jante entre deux parois cylindriques de la jante et du disque ce qui rend indépendants l'intensité du serrage entre le disque et la jante et la cote de déport de la jante. Il est donc beaucoup plus aisé de maîtriser convenablement les conditions de fabrication industrielle d'une telle roue.

Avantageusement, le bord radialement extérieur du disque s'étend axialement d'une distance sensiblement identique à la largeur axiale du siège extérieur de la jante. Cela permet d'obtenir une bonne qualité en endurance de la liaison.

Selon un mode de réalisation avantageux, lorsque le siège extérieur de la jante est adjacent à un bossage de sécurité ou hump, le bord radialement extérieur du disque s'étend axialement d'une distance sensiblement identique à la largeur axiale du siège extérieur augmenté de tout ou partie de la largeur axiale du bossage de sécurité.

Lorsque la jante comprend en plus, entre le flan extérieur de la gorge de montage et le bossage de sécurité, une zone cylindrique de transition, la zone de contact entre le disque et la jante s'étend axialement, outre le siège, sur tout ou partie de la paroi radialement intérieure de la zone cylindrique de transition. Ces deux derniers modes de réalisation augmentent la longueur axiale de la zone de contact entre le disque et la jante et ainsi renforcent la tenue mécanique en fatigue de la liaison.

La courbure du bord extérieur du disque peut être orientée axialement vers l'intérieur ou vers l'extérieur de la jante.

Les roues selon l'invention peuvent avoir un disque en tôle d'acier ou d'aluminium réalisé par emboutissage. Comme l'emboîtage est réalisé entre deux zones cylindriques, le procédé de fabrication des disques est simplifié en ce qu'une opération d'usinage du bord du disque auparavant nécessaire pour obtenir la zone conique d'emboîtage peut être supprimée.

La liaison entre le disque et la jante peut être assurée par un procédé de soudure par points disposés régulièrement circonférentiellement et axialement sensiblement au milieu du siège extérieur.

L'invention a aussi pour objet une roue dite « full face » pour véhicule automobile comportant une jante en tôle métallique avec axialement de l'intérieur vers l'extérieur, un crochet intérieur, un siège intérieur, une gorge de montage et au moins une partie de siège extérieur avec une paroi radialement extérieure tronconique d'inclinaison α relativement à l'axe de rotation de la roue, un disque avec une portée moyeu, une zone de transition terminée radialement par un crochet extérieur, ainsi qu'un épaulement s'étendant axialement vers l'intérieur et dont la paroi radialement extérieure est destinée à constituer avec la paroi radialement intérieure de l'extrémité extérieure du siège extérieur de la jante la zone d'assemblage du disque avec la jante, caractérisée en ce que les deux surfaces d'assemblages du disque et de la jante ont une géométrie cylindrique.

Cette roue présente le même avantage que la roue avec assemblage sous le siège précédente d'avoir un emboîtage cylindrique qui permet de bien maîtriser le serrage entre le disque et la jante ainsi que le déport axial de la jante relativement au disque.

Avantageusement la variation d'épaisseur entre la paroi radialement extérieure tronconique et la paroi radialement intérieure cylindrique du siège extérieur ou de la partie de siège extérieur de la jante des roues selon l'invention est réalisée par une opération de fluotournage.

De préférence, l'épaisseur de la jante ou de la partie de jante est inférieure dans la zone située entre le flan extérieur de la gorge de montage et le crochet intérieur relativement à l'épaisseur des autres parties de ladite jante et cette variation d'épaisseur est réalisée par des opérations de fluotournage.

L'utilisation d'une jante avec ces variations d'épaisseur permet de diminuer substantiellement le poids de la jante sans limiter son endurance mécanique. On peut ainsi obtenir un poids sensiblement comparable à celui des roues assemblées sous la gorge de montage.

L'invention a aussi pour objet un procédé de fabrication d'une roue pour véhicule dans lequel :
- on réalise une jante en tôle métallique en suivant les étapes suivantes :
   - on découpe un flan en tôle métallique pour obtenir une géométrie rectangulaire ;
   - on cintre le flan pour obtenir une virole cylindrique ;
   - on soude ensemble les deux bords libres de la virole ;
   - on calibre la virole à un diamètre donné ;
   - on effectue au moins une opération de fluotournage cylindrique pour obtenir un profil donné d'épaisseur de la virole, comportant notamment dans la zone destinée à constituer le siège extérieur une inclinaison d'angle α relativement à la direction axiale ;
   - on effectue un profilage de la virole pour obtenir la jante, avec notamment dans la zone du siège extérieur une paroi radialement intérieure cylindrique et une paroi radialement extérieure tronconique d'inclinaison α correspondant à l'inclinaison normalisée des sièges de ladite jante ; et
   - on calibre ladite jante ;
- on réalise un disque avec un bord d'assemblage dont la surface radialement extérieure a une géométrie cylindrique ;
- on assemble ladite jante et ledit disque par emboîtage sous le siège extérieur de la jante ; et
- on soude ledit assemblage.

Le disque peut être réalisé par emboutissage d'une tôle métallique avec rabattage du bord extérieur pour obtenir un bord d'assemblage cylindrique. Il peut aussi être obtenu par fonderie.

L'invention va maintenant être décrite à l'aide du dessin annexé dans lequel :
- la figure 1 est une coupe d'une roue usuelle avec assemblage sous la gorge de montage ;
- la figure 2 présente une coupe partielle d'un premier mode de réalisation de l'invention illustrant la zone d'emboîtage disque/jante et une soudure par points ;
- la figure 3 est une coupe similaire à celle de la figure 2, avec une soudure par cordon ;
- la figure 4 présente un deuxième mode de réalisation de l'invention avec une soudure par points ;
- la figure 5 est une coupe similaire à celle de la figure 4 avec une soudure par cordon ;
- les figures 6 et 7 présentent un troisième mode de réalisation de l'invention avec une soudure par points ou par cordon ;
- les figures 8 et 9 présentent un quatrième mode de réalisation de l'invention dans le cas d'une roue full-face ;
- les figures 10, 11, 12, 13, 14, 15 et 16 présentent différentes étapes du procédé de réalisation d'une jante selon l'invention avec des opérations de fluotournage ; et
- la figure 17 illustre schématiquement les différentes étapes d'un procédé de réalisation d'une roue avec assemblage sous siège selon l'invention.

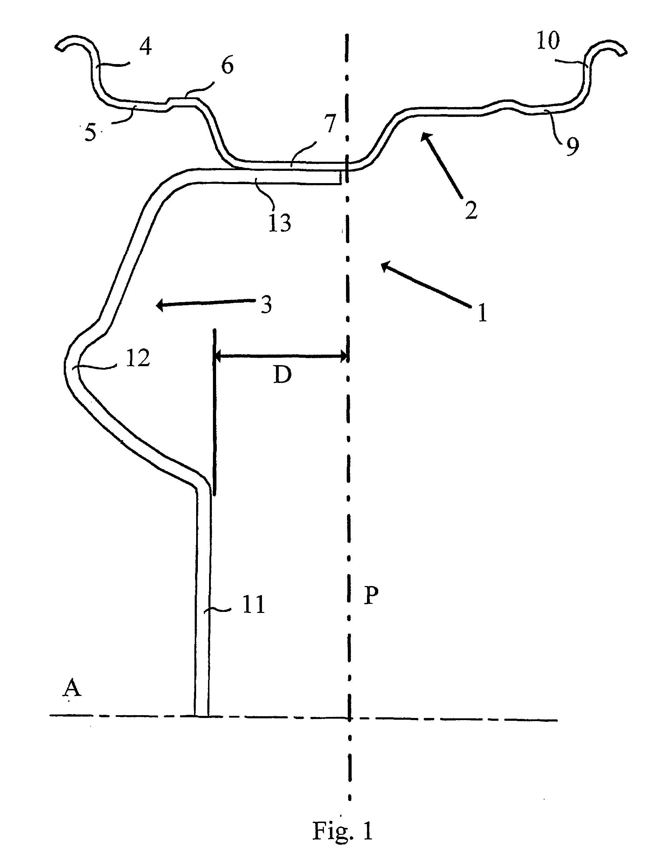

A la figure 1 est présentée une coupe partielle d'une roue usuelle en tôle d'acier. Cette roue 1 comprend une jante 2 et un disque 3. Cette figure illustre le plan médian de la roue ou plan P. Ce plan est disposé à égale distance des deux crochets de la jante. Les positions axialement intérieures et extérieures sont définies en prenant comme référence le plan médian P.

La jante présente un crochet extérieur 4, un siège extérieur 5, un bossage de sécurité ou hump 6, une gorge de montage 7, un siège intérieur 9 et un crochet intérieur 10. Le disque 3 comprend une portée moyeu 11, une zone de transition 12 et un bord d'assemblage 13. L'assemblage est réalisé par emboîtage sous la gorge de montage 7.

On voit aussi sur cette figure l'axe de rotation A et le déport D, ou distance séparant le plan axialement intérieur de la portée moyeu 11 du plan médian P.

Dans ce qui suit, on utilisera les mêmes références pour les parties similaires des roues selon l'invention.

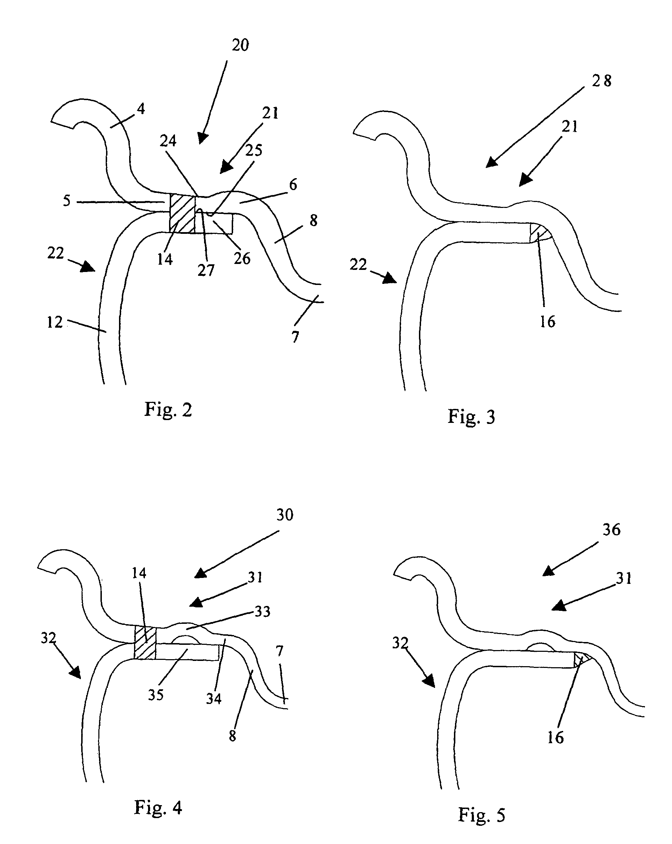

La figure 2 présente une coupe partielle schématique d'un premier mode de réalisation d'une roue 20 selon l'invention. Cette roue 20 comprend une jante 21 et un disque 22. La jante 21 a notamment un crochet extérieur 4, un siège extérieur 5, un bossage de sécurité ou hump 6, une gorge de montage 7 et un flan extérieur 8 de la gorge 7. Le siège 5 a une paroi radialement extérieure 24 et une paroi radialement intérieure 25. La paroi 24 a une inclinaison α relativement à l'axe de rotation A de la roue correspondant aux valeurs normalisées par l'ETRTO, soit usuellement 5° pour les véhicules de tourisme. Le disque 22 a une zone de transition 12 et un bord d'assemblage 26. Le bord d'assemblage 26 a une paroi radialement extérieure 27. Le bord d'assemblage 26 du disque 22 ainsi que la paroi radialement intérieure 25 de la jante 21 sont cylindriques. Cette forme facilite fortement les conditions dans lesquelles s'effectue l'emboîtage du disque sous le siège extérieur 5 de la jante. Pour assurer un bon serrage entre le disque 22 et la jante 21, avant l'assemblage, le diamètre de la paroi radialement extérieure 27 du bord d'assemblage 26 du disque 22 est légèrement supérieur à celui de la paroi radialement intérieure 25 du siège 5. La pérennité de la liaison entre le disque 22 et la jante 21 est assurée par une soudure par points tels que 14. Les points de soudure 14 sont situés axialement sensiblement au milieu du siège extérieur 5 et sont régulièrement répartis circonférentiellement.

La jante 21 de la roue 20 a un bossage de sécurité 6 dont la surface extérieure est torique mais dont la surface radialement intérieure est cylindrique dans le prolongement de la surface d'emboîtage 25 du siège extérieur 5 de la jante 21. Le bord d'assemblage 26 du disque 22 s'étend axialement sous tout ou partie du bossage de sécurité 6. L'assemblage entre le disque 22 et la jante 21 de cette roue 20 est effectué de telle sorte que la courbure du bord d'assemblage 26 du disque 22 est orientée vers l'intérieur de la roue 20.

La figure 3 présente une coupe schématique partielle d'une roue 28 similaire à la roue 20. La liaison entre le disque 22 et la jante 21 de cette roue 25 est assurée par une soudure par cordon 16. Ce cordon de soudure 16 peut être continu ou discontinu.

La figure 4 présente une roue 30 comportant une jante 31 et un disque 32. Entre le flanc 8 de la gorge de montage 7 et le bossage de sécurité 33, se trouve une zone de transition 34 cylindrique. Le bord d'assemblage 35 du disque 32 s'étend axialement intérieurement jusque tout ou partie de la zone de transition 34. Cela renforce la stabilité mécanique de l'assemblage entre le disque et la jante ainsi que son endurance en service. Dans ce mode de réalisation, le bossage de sécurité 33 présente une paroi radialement intérieure elle aussi torique et ainsi a une épaisseur sensiblement constante. La roue 30 a une soudure par points 14.

La figure 5 présente une coupe schématique partielle d'une roue 36 similaire à la roue 30. La liaison entre le disque 32 et la jante 31 de cette roue 36 est assurée par une soudure par cordon 16. Ce cordon de soudure 16 peut être continu ou discontinu.

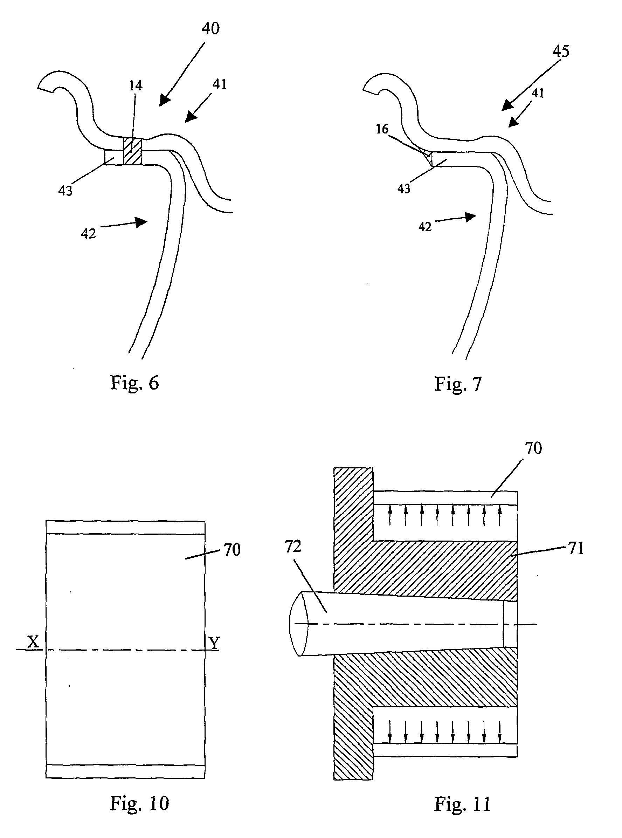

Les figures 6 et 7 présentent des coupes similaires de roues 40 et 45 dans lesquelles les assemblages entre les disques 42 et les jantes 41 sont réalisés de telle sorte que la courbure des bords d'assemblages 43 de ces roues est, après l'assemblage, orienté vers l'extérieur de la roue. Ce mode d'assemblage donne aux roues 40 et 45 une physionomie particulière et permet d'obtenir un profil bien optimisé mécaniquement du disque. La roue 40 présente une soudure par points 14, la roue 45 une soudure par cordon 16.

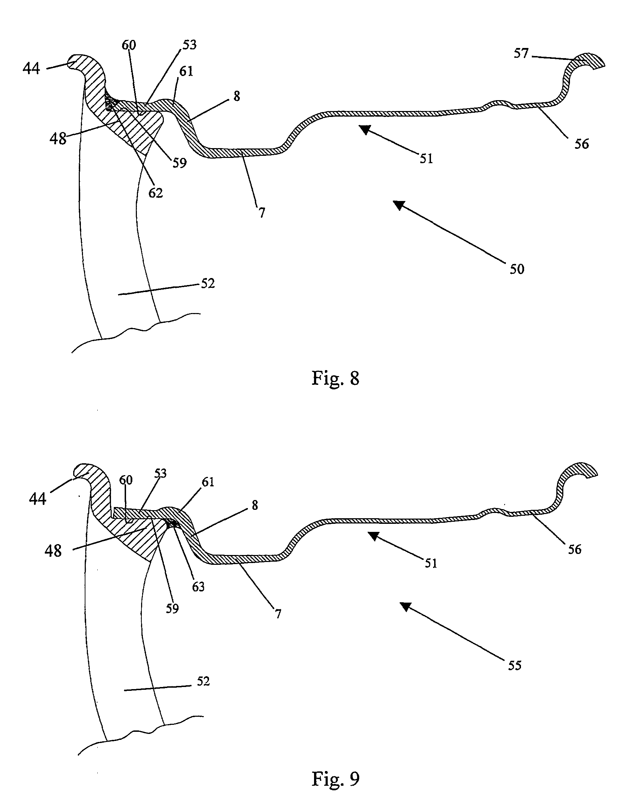

Les figures 8 et 9 présentent un autre mode de réalisation d'une roue selon l'invention. Les roues 50 et 55 ont une jante 51 qui se termine axialement extérieurement sensiblement à l'extrémité du siège extérieur 53. Le crochet extérieur 44 fait partie intégrante du disque 52. Le disque 52 comprend axialement intérieurement un épaulement 48 dont la paroi radialement extérieure 59 est cylindrique de diamètre adapté pour coopérer avec la paroi radialement intérieure 60 du siège extérieur 53, elle aussi cylindrique, pour réaliser un emboîtage cylindrique du disque 52 et de la jante 51. Les roues 50 et 55 ont toutes les deux une soudure par cordon. Le cordon 62 est réalisé radialement extérieurement à l'extrémité du siège extérieur 53 pour la roue 50, le cordon 63 est réalisé radialement intérieurement à l'extrémité axialement intérieure de l'épaulement 48, sous le bossage de sécurité 61, pour la roue 55. Le disque 52 est de préférence réalisé par moulage d'un alliage d'aluminium.

La jante 51 est constituée d'une tôle métallique dont l'épaisseur est variable. Le siège extérieur 53 a une épaisseur variable pour donner à sa paroi extérieure une inclinaison conforme à l'ETRTO et à sa paroi intérieure 60 un diamètre constant, légèrement inférieur à celui de la paroi correspondante 59 de l'épaulement 48 du disque 52. La section de la jante 51 a une épaisseur variable adaptée au type de sollicitation de la roue. Son épaisseur diminue progressivement à partir du flan extérieur 8 de la gorge de montage 7 jusqu'au siège intérieur 56. L'épaisseur de la tôle métallique de la jante 51 augmente à partir de l'extrémité du siège intérieur 56 jusqu'à l'extrémité du crochet intérieur 57. Ces variations d'épaisseur assurent un gain de poids substantiel sans limiter l'endurance en service des roues.

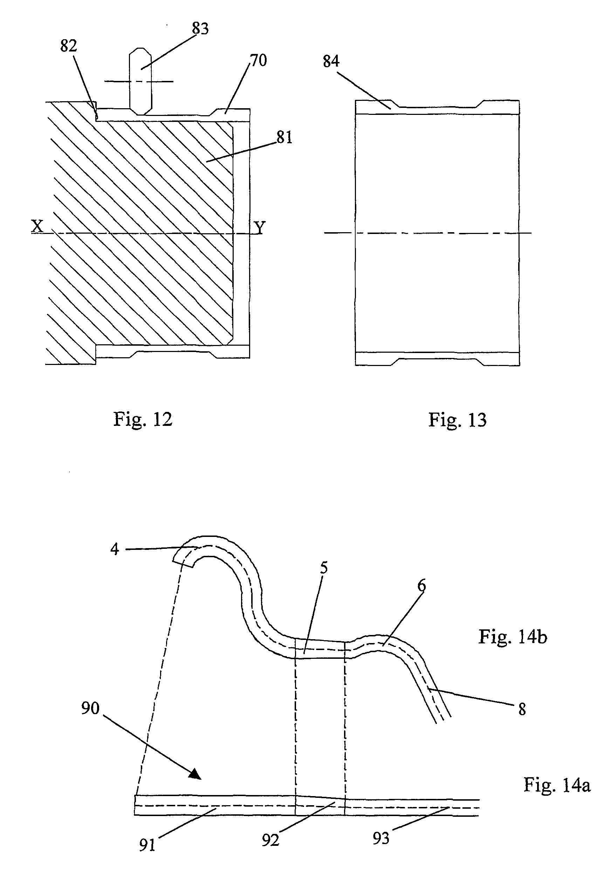

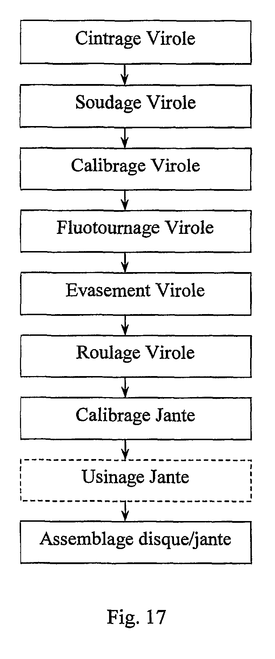

Un procédé avantageux pour réaliser des jantes des roues selon l'invention est illustré à la figure 17. Initialement, un flan de tôle (non représenté) métallique approprié, d'acier ou d'aluminium ou d'alliages est cintré pour lui donner une forme généralement cylindrique de virole 70 avec deux bords libres. Ensuite, la virole 70 est soudée par un procédé de soudure par étincelage, par résistance ou autre. Cette virole 70 a une épaisseur constante (figure 10). La virole 70 est ensuite calibrée en extension à l'aide d'un outil de calibrage schématisé à la figure 11. L'expansion est obtenue par le déplacement d'une came 72 qui écarte des secteurs 71 autour desquels est installée la virole 70. La figure 12 illustre l'étape suivante qui consiste à obtenir par fluotournage cylindrique le profil à plat recherché pour les jantes selon l'invention. Le procédé de fluotournage utilisé est le fluotoumage inverse. La virole 70 est montée sur un mandrin 81 et vient en appui contre une paroi 82. Le mandrin 81 est alors mis en rotation et au moins deux mollettes 83 viennent rouler sur la surface radialement extérieure de la virole 70 dans les zones dont l'épaisseur doit être diminuée. Les mollettes 83 sont déplacées axialement dans la direction de l'axe X en appliquant un effort radial et tangentiel de telle sorte que le flux de matière flue en direction de Y, en sens inverse du déplacement des mollettes 83. La figure 13 illustre schématiquement la virole 84 de profil variable obtenue.

Après le fluotournage, la virole 84 subit une ou plusieurs opérations de roulage destinées à lui donner le profil final des jantes selon l'invention.

Les figures 14, 15 et 16 illustrent la relation entre le profil final de la partie axialement extérieure de la jante et celui des viroles correspondantes.

La figure 14a présente un détail d'une virole 90 dont le profil a trois parties. L'extrémité 91 a une épaisseur constante correspondant à celle du crochet de jante 4 (figure 14b), la partie 93 a aussi une épaisseur constante inférieure pour le hump 6 et le flan 8 de la gorge de montage et la partie intermédiaire a une épaisseur variable avec une inclinaison de 5° relativement à l'axe de rotation de la virole. Cette partie 92 va donner après roulage le siège extérieur 5 de la jante dont la paroi radialement extérieure a aussi une inclinaison de 5° et dont la paroi radialement intérieure est cylindrique.

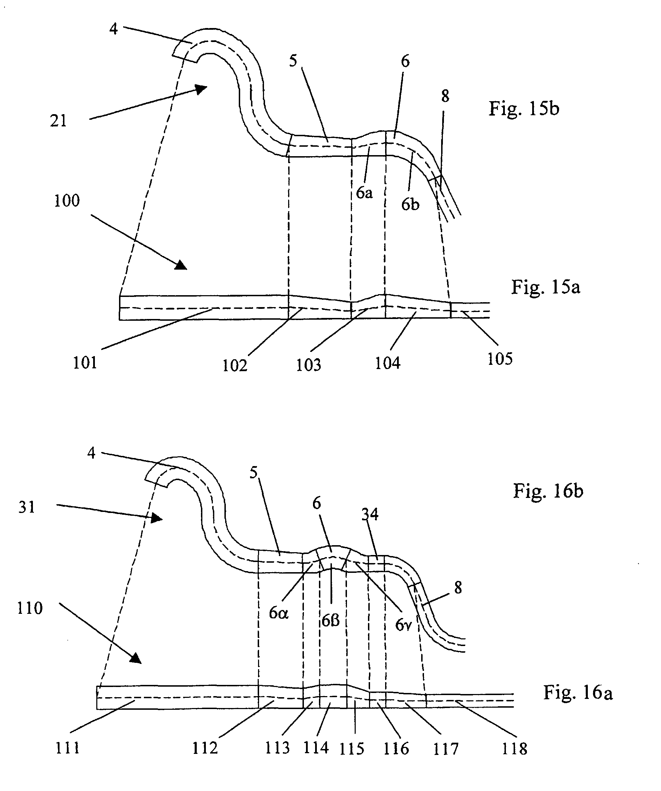

La figure 15a illustre un détail d'une virole 100 dont le profil présente cinq parties. La partie 101 est d'épaisseur constante et correspond au crochet de jante 4 (figure 15b). La partie 102, dont l'épaisseur diminue vers l'intérieur, correspond au siège extérieur 5. La partie 103, d'épaisseur croissante vers l'intérieur, correspond à la première partie 6a d'un bossage de sécurité 6 dont la paroi radialement intérieure reste cylindrique et dont la paroi radialement extérieure est torique. La partie 104 a une épaisseur décroissante et correspond à la deuxième partie 6b du bossage de sécurité 6 ainsi qu'au début du flan 8 de la gorge de montage. Enfin, la partie 105, d'épaisseur constante correspond à la fin du flan 8 de la gorge de montage. La jante 21 ainsi obtenue correspond à celle des figures 2 et 3.

La figure 16a illustre une virole 110 dont le profil présente 8 parties (111 à 118). La partie 116 du profil correspond à une zone cylindrique de transition 34 d'épaisseur constante (figure 16b) disposée entre le flan 8 de la gorge de montage et le bossage de sécurité. Les parties 113, 114 et 115 du profil correspondent à trois parties 6α, 6β et 6γ du bossage de sécurité 6. Les parties 114 et 6β ont une épaisseur constante. La jante 31 ainsi obtenue correspond à celle des figures 4 et 5.

On calibre à nouveau les jantes ainsi obtenues et on réalise l'emboîtage avec des disques appropriés. Comme cet emboîtage s'effectue entre deux parois cylindriques ou sensiblement cylindriques, aux incertitudes classiques de fabrication industrielle près, une bonne maîtrise des conditions de serrage et de déport de la jante relativement au disque est grandement facilitée.

La figure 17 comporte une étape d'usinage de la zone d'emboîtage de la jante. Cette étape est optionnelle. Cette étape a pour but de parfaire la géométrie cylindrique de la zone d'emboîtage dans le cas d'un assemblage sensible. En tout état de cause, cet usinage cylindrique est beaucoup plus simple et moins coûteux à réaliser qu'un usinage conique.

## Revendications

1. Roue (20, 28, 30, 36, 40, 45) pour véhicule automobile comportant une jante (21, 31, 41) en tôle métallique avec un crochet extérieur (4) et un crochet intérieur (10), un siège extérieur (5) avec une paroi radialement extérieure (24) tronconique d'inclinaison α relativement à l'axe de rotation de la roue et un siège intérieur (9), une gorge de montage (7), un disque (22, 32, 42) en tôle métallique avec une portée moyeu (11), un bord radialement extérieur (26, 35, 43) destiné à l'assemblage avec ladite jante et une zone de liaison (12), l'assemblage entre ladite jante et ledit disque étant réalisé entre la paroi radialement intérieure (25) du siège extérieur (5) de ladite jante et la paroi radialement extérieure (27) du bord (26, 35, 43) dudit disque, **caractérisée en ce que** l'épaisseur radiale du siège extérieur (5) varie axialement de sorte que la paroi radialement intérieure (25) dudit siège extérieur est cylindrique et **en ce que** la paroi radialement extérieure (27) du bord d'assemblage (26, 35, 43) dudit disque est cylindrique.

2. Roue selon la revendication 1, dans laquelle le bord radialement extérieur dudit disque s'étend axialement d'une distance sensiblement identique à la largeur axiale dudit siège extérieur de ladite jante.

3. Roue (20, 28, 40, 45) selon la revendication 1, dans laquelle, le siège extérieur (5) de ladite jante (21) étant adjacent à un bossage de sécurité ou humpy (6), le bord radialement extérieur (26) dudit disque (22) s'étend axialement d'une distance sensiblement identique à la largeur axiale dudit siège extérieur (5) de ladite jante augmentée de tout ou partie de la largeur axiale dudit bossage de sécurité (6).

4. Roue (30, 36) selon la revendication 1, dans laquelle, la jante (31) comportant en plus, disposée entre le flan extériéur (8) de la gorge de montage (7) et le bossage de sécurité (6), une zone cylindrique de transition (34), la zone de contact entre le disque (32) et la jante (31) s'étend axialement, outre le siège (5), sur tout ou partie de la paroi radialement intérieure de la zone cylindrique de transition (34).

5. Roue (20, 28, 30, 36, 40, 45) selon l'une des revendications 1 à 4, dans laquelle ledit disque (22, 32, 42) est un disque en tôle métallique et est réalisé par emboutissage.

6. Roue (20, 28, 30, 36, 40, 45) selon la revendication 5, dans laquelle ledit disque (22, 32, 42) est en tôle d'aluminium.

7. Roue (20, 30, 40) selon l'une des revendications 1 à 6, dans laquelle l'assemblage entre ledit disque (22, 32, 42) et ladite jante (21, 31, 41) est réalisé par un procédé de soudure par points (14) disposés régulièrement circonférentiellement et axialement sensiblement au milieu du siège (5).

8. Roue (40, 45) selon l'une des revendications 1 à 7, dans laquelle la courbure du bord extérieur (43) du disque (42) est orientée axialement vers l'extérieur.

9. Roue (20, 28, 30, 36) selon l'une des revendications 1 à 7, dans laquelle la courbure du bord extérieur (26) du disque (22) est orientée axialement vers l'intérieur.

10. Roue selon l'une des revendications 1 à 9, dans laquelle ledit disque comprend une portée moyeu prolongée radialement extérieurement par une pluralité de bras chacun terminé par un bord extérieur cylindrique destiné à l'assemblage avec ladite jante.

11. Roue « full-face » (50, 55) pour véhicule automobile comportant une jante (51) en tôle métallique avec axialement de l'intérieur vers l'extérieur, un crochet intériéur (57), un siège intériéur (56), une gorge de montage (7) et au moins une partie de siège extérieur (53) avec une radialement extérieure tronconique d'inclinaison α relativement à l'axe de rotation de la roue, un disque avec une portée moyeu, une zone de transition (52) terminée radialement par un crochet extérieur (44), ainsi qu'un épaulement (48) s'étendant axialement vers l'intérieur et dont la paroi radialement extérieure (59) est destinée à constituer avec la paroi radialement intérieure (60) de l'extrémité extérieure du siège extériéur (53) de la jante (51) la zone d'assemblage dudit disque avec ladite jante, **caractérisée en ce que** l'épaisseur radiale d'au moins la partie du siège extérieur (53) varie axialement de sorte que la paroi radialement intérieur (60) dudit siège extérieur (53) est cylindrique et **en ce que** ladite paroi radialement extérieur (59) dudit épaulement (48) dudit disque a une géométrie cylindrique.

12. Roue (20, 28, 30, 36, 40, 45, 50, 55) selon l'une des revendications 1 à 11, dans laquelle la variation d'épaisseur entre la paroi radialement extérieure tronconique et la paroi radialement intérieure (27, 60) cylindrique du siège extérieur (5) ou de ladite partie de siège extérieur (53) de ladite jante (21, 31, 41, 51) est réalisée par une opération de fluotournage.

13. Roue (20, 28, 30, 36, 40, 45, 50, 55) selon l'une des revendications 1 à 12, dans laquelle l'épaisseur de ladite jante (21, 31, 41, 51) est inférieure dans la zone située entre le flan extérieur (8) de la gorge de montage (7) et le crochet intérieur (10, 57) relativement à l'épaisseur des autres parties de ladite jante et dans laquelle ladite variation d'épaisseur est réalisée par des opérations de fluotournage cylindrique.

14. Roue (20, 28, 30, 36, 40, 45, 50, 55) selon l'une des revendications 1 à 13, dans laquelle l'angle d'inclinaison α est de 5 degrés.

15. Procédé de fabrication d'une roue (20, 24, 30, 36, 40, 45) pour véhicule dans lequel :
• on réalise une jante (21, 31, 41) en tôle métallique en suivant les étapes suivantes :
- on découpe un flan en tôle métallique pour obtenir une géométrie rectangulaire ;
- on cintre le flan pour obtenir une virole (70) cylindrique ;
- on soude ensemble les deux bords libres de la virole (70);
- on calibre la virole à un diamètre donné ;
- on effectue au moins une opération de fluotournage cylindrique pour obtenir un profil donné d'épaisseur de la virole (84, 90, 100, 110), comportant notamment dans la zone (92, 102, 112) destinée à constituer le siège extérieur (5) une inclinaison d'angle α relativement à la direction axiale ;
- on effectue un profilage de la virole pour obtenir la jante, avec notamment dans la zone du siège extérieur une paroi radialement intérieure cylindrique et une paroi radialement extérieure tronconique d'inclinaison α correspondant à l'inclinaison normalisée des sièges de ladite jante ; et
- on calibre ladite jante ;
• on réalise un disque (22, 32, 42) avec un bord d'assemblage (26, 35, 43) dont la surface radialement extérieure (27) a une géométrie cylindrique ;
• on assemble ladite jante et ledit disque par emboîtage sous le siège extérieur (5) de la jante ; et
• on soude ledit assemblage.

16. Procédé selon la revendication 15, dans lequel le disque (22, 32, 42) est en tôle métallique et est réalisé par emboutissage avec rabattage du bord extérieur pour obtenir un bord d'assemblage (26, 35, 43) cylindrique.

17. Procédé selon la revendication 15, dans lequel le disque est réalisé par fonderie.

18. Procédé selon l'une des revendications 15 à 17, dans lequel la soudure du disque sur la jante est effectuée par points.

## Patentansprüche

1. Rad (20, 28, 30, 36, 40, 45) für ein Kraftfahrzeug, das eine Felge (21, 31, 41) aus Metallblech mit einer äußeren Nutpartie (4) und einer inneren Nutpartie (10), einem äußeren Sitz (5) mit einer radial äußeren, kegelstumpfförmigen Wand (24) mit einer Neigung α bezüglich der Drehachse des Rads, und einem inneren Sitz (9), einem Montagebett (7), und eine Schüssel (22, 32, 42) aus Metallblech mit einer Radanlagefläche (11), einem radial äußeren Rand (26, 35, 43), der zur Montage mit der Felge bestimmt ist, und einer Verbindungszone (12) aufweist, wobei die Montage von Felge und Schüssel zwischen der radial inneren Wand (25) des äußeren Sitzes (5) der Felge und der radial äußeren Wand (27) des Rands (26, 35, 43) der Schüssel erfolgt, **dadurch gekennzeichnet, dass** die radiale Dicke des äußeren Sitzes (5) axial variiert, so dass die axial innere Wand (25) des äußeren Sitzes zylindrisch ist, und dass die radial äußere Wand (27) des Montagerands (26, 35, 43) der Schüssel zylindrisch ist.

2. Rad nach Anspruch 1, bei dem der radial äußere Rand der Schüssel sich axial in einem Abstand im wesentlichen gleich der axialen Breite des äußeren Sitzes der Felge erstreckt.

3. Rad (20, 28, 40, 45) nach Anspruch 1, bei dem der äußere Sitz (5) der Felge (21) einem Sicherheitswulst oder Hump (6) benachbart ist, und der radial äußere Rand (26) der Schüssel (22) sich axial im einem Abstand im wesentlichen gleich der axialen Breite des äußeren Sitzes (5) der Felge, erhöht um die ganze oder einen Teil der axialen Breite des Sicherungswulsts (6), erstreckt.

4. Rad (30, 36) nach Anspruch 1, bei dem die Felge (31) außerdem zwischen dem äußeren Abschnitt (8) des Montagebetts (7) und dem Sicherheitswulst (6) eine zylindrische Übergangszone (34) aufweist, wobei die Kontaktzone zwischen der Schüssel (32) und der Felge (31) sich axial jenseits des Sitzes (5) über die ganze oder einen Teil der radial inneren Wand der zylindrischen Übergangszone (34) erstreckt.

5. Rad (20, 28, 30, 36, 40, 45) nach einem der Ansprüche 1 bis 4, bei dem die Schüssel (22, 32, 42) eine Schüssel aus Metallblech ist und durch Tiefziehen hergestellt wird.

6. Rad (20, 28, 30, 36, 40, 45) nach Anspruch 5, bei dem die Schüssel (22, 32, 42) aus Aluminiumblech ist.

7. Rad (20, 30, 40) nach einem der Ansprüche 1 bis 6, bei dem die Montage von Schüssel (22, 32, 42) und Felge (21, 31, 41) durch ein Punktschweißverfahren erfolgt, wobei die Punkte (14) gleichmäßig in Umfangsrichtung und axial im wesentlichen in der Mitte des Sitzes (5) angeordnet sind.

8. Rad (40, 45) nach einem der Ansprüche 1 bis 7, bei dem die Krümmung des Außenrands (43) der Schüssel (42) axial nach außen gerichtet ist.

9. Rad (20, 28,. 30, 36) nach einem der Ansprüche 1 bis 7, bei dem die Krümmung des Außenrands (26) der Schüssel (22) axial nach innen gerichtet ist.

10. Rad nach einem der Ansprüche 1 ä 9, bei dem die Schüssel eine Radanlagefläche aufweist, die radial außen von mehreren Armen verlängert wird, die je in einem äußeren zylindrischen Rand enden, der zur Montage mit der Felge bestimmt ist.

11. Full-Face-Rad (50, 55) für ein Kraftfahrzeug, das eine Felge (51) aus Metallblech mit axial von innen nach außen einer inneren Nutpartie (57), einem inneren Sitz (56), einem Montagebett (7) und mindestens einem äußeren Sitzteil (53) mit einer radial äu- i ßeren, kegelstumpfförmigen Wand mit einer Neigung α bezüglich der Drehachse des Rads, und eine Schüssel mit einer Radanlagefläche, mit einer Übergangszone (52), die radial von einer äußeren Nutpartie (44) beendet wird, sowie mit einer Schulter (48) aufweist, die sich axial nach innen erstreckt und deren radial äußere Wand (59) mit der radial inneren Wand (60) des äußeren Endes des äußeren Sitzes (53) der Felge (51) den Montagebereich der Schüssel mit der Felge bilden soll, **dadurch gekennzeichnet, dass** die radiale Dicke mindestens des äußeren Sitzteils (53) axial variiert, so dass die radial innere Wand (60) des äußeren Sitzes (53) zylindrisch ist, und dass die radial äußere Wand (59) der Schulter (48) der Schüssel eine zylindrische Geometrie hat.

12. Rad (20, 28, 30, 36, 40, 45, 50, 55) nach einem der Ansprüche 1 bis 11, bei dem die Variation der Dicke zwischen der radial äußeren, kegelstumpfförmigen Wand und der radial inneren, zylindrischen Wand (27, 60) des äußeren Sitzes (5) oder des äußeren Sitzteils (53) der Felge (21, 31, 41, 51) durch einen Rolldrückvorgang erzeugt wird.

13. Rad (20, 28, 30, 36, 40, 45, 50, 55) nach einem der Ansprüche 1 bis 12, bei dem die Dicke der Felge (21, 31, 41, 51) in dem Bereich zwischen dem äußeren Abschnitt (8) des Montagebetts (7) und der inneren Nutpartie (10, 57) geringer ist als in den anderen Bereichen der Felge, und bei dem die Variation der Dicke durch zylindrische Rolldrückvorgänge erzeugt wird.

14. Rad (20, 28, 30, 36, 40, 45, 50, 55) nach einem der Ansprüche 1 bis 13, bei dem der Neigungswinkel α 5° beträgt.

15. Herstellungsverfahren für ein Fahrzeugrad (20, 28, 30, 36, 40, 45), bei dem:
• eine Felge (21, 31, 41) aus Metallblech gemäß den folgenden Schritten hergestellt wird:
- es wird ein Abschnitt aus Metallblech ausgeschnitten, um eine rechteckige Geometrie zu erhalten;
- der Abschnitt wird gekrümmt, um einen zylindrischen Ring (70) zu erhalten;
- die beiden freien Ränder des Rings (70) werden zusammengeschweißt;
- der Ring wird auf einen gegebenen Durchmesser kalibriert;
- es wird mindestens ein Vorgang des zylindrischen Rolldrükkens durchgeführt, um ein gegebenes Dickenprofil des Rings (84, 90, 100, 110) zu erhalten, das insbesondere in dem Bereich (92, 102, 112), der dazu bestimmt ist, den äußeren Sitz (5) zu bilden, eine Neigung mit einem Winkel α bezüglich der axialen Richtung aufweist;
- es wird eine Profilbearbeitung des Rings durchgeführt, um die Felge zu erhalten, mit insbesondere im Bereich des äußeren Sitzes einer radial inneren, zylindrischen Wand und einer radial äußeren, kegelstumpfförmigen Wand mit einer Neigung α, die der Standardneigung der Sitze der Felge entspricht; und
- die Felge wird kalibriert;
• eine Schüssel (22, 32, 42) mit einem Montagerand (25, 35, 43) hergestellt wird, dessen radial äußere Fläche (27) eine zylindrische Geometrie aufweist;
• die Felge und die Schüssel durch Einpassen unter den äußeren Sitz (5) der Felge montiert werden; und
• die Montage verschweißt wird.

16. Verfahren nach Anspruch 15, bei dem die Schüssel (22, 32, 42) aus Metallblech ist und durch Tiefziehen mit Umschlagen des Außenrands hergestellt wird, um einen zylindrischen Montagerand (26, 35, 43) zu erhalten.

17. Verfahren nach Anspruch 15, bei dem die Schüssel durch Schmelzguss hergestellt wird.

18. Verfahren nach einem der Ansprüche 15 bis 17, bei dem das Schweißen der Schüssel auf die Felge punktweise erfolgt.

## Claims

1. Wheel (20, 28, 30, 36, 40, 45) for an automobile, comprising a sheet metal rim (21, 31, 41) with an outer rim flange (4) and an inner rim flange (10), an outer rim seat (5) with a radially outer frustoconical wall (24) inclined at an angle α relative to the wheel's rotation axis, an inner rim seat (9), a mounting groove (7), and a sheet metal disc (22, 32, 42) with a hub bearing surface (11), a radially outer edge (26, 35, 43) designed for assembly with the said rim, and a connection zone (12), assembly between the said rim and the said disc being effected between the radially inner wall (25) of the outer seat (5) of the said rim and the radially outer wall (27) of the edge (26, 35, 43) of the said disc,
**characterised in that**
the radial thickness of the outer seat (5) varies axially in such manner that the radially inner wall (25) of the said outer seat is cylindrical, and the radially outer wall (27) of the assembly edge (26, 35, 43) of the said disc is also cylindrical.

2. Wheel according to Claim 1, in which the radially outer edge of the said disc extends axially a distance essentially identical to the axial width of the said outer seat of the said rim.

3. Wheel (20, 28, 40, 45) according to Claim 1, in which the outer seat (5) of the said rim (21) is adjacent to a safety boss or hump (6), and the radially outer edge (26) of the said disc (22) extends axially a distance essentially identical to the axial width of the said outer seat (5) of the said rim increased by whole or part of the axial width of the said safety hump (6).

4. Wheel (30, 36) according to Claim 1, in which the rim (31) also comprises, positioned between the outer side-wall (8) of the mounting groove (7) and the safety hump (6), a cylindrical transition zone (34), and the zone of contact between the disc (32) and the rim (31) extends axially beyond the seat (5), over all or part of the radially inner wall of the cylindrical transition zone (34).

5. Wheel (20, 28, 30, 36, 40, 45) according to any of Claims to 4, in which the said disc (22, 32, 42) is a disc of metal plate and is made by stamping.

6. Wheel (20, 28, 30, 36, 40, 45) according to Claim 5, in which the said disc (22, 32, 42) is made from aluminium plate.

7. Wheel (20, 30, 40) according to any of Claims 1 to 6, in which the said disc (22, 32, 42) and the said rim (21, 31, 41) are assembled together by a process of spot welding at points (14) arranged circumferentially at regular intervals and axially essentially in the middle of the seat (5).

8. Wheel (40, 45) according to any of Claims 1 to 7, in which the curvature of the outer edge (43) of the disc (42) is orientated axially outwards.

9. Wheel (20, 28, 30, 36) according to any of Claims 1 to 7, in which the curvature of the outer edge (26) of the disc (22) is oriented axially inwards.

10. Wheel according to any of Claims 1 to 9, in which the said disc comprises a hub bearing surface extended radially outwards by a plurality of arms each ending in a cylindrical outer edge designed for assembly with the said rim.

11. "Full-face" wheel (50, 55) for an automobile, comprising a sheet metal rim (51) having, axially from the inside outwards, an inner rim flange (57), an inner seat (56), a mounting groove (7) and at least part of an outer rim seat (53) with a radially outer frustoconical wall inclined at an angle α relative to the rotation axis of the wheel, a disc with a hub bearing surface, a transition zone (52) ending radially in an outer rim flange (44), and a shoulder (48) extending axially inwards whose radially outer wall (59) is designed to constitute, together with the radially inner wall (60) of the outer end of the outer seat (52) of the rim (51), the assembly zone of the said disc with the said rim,
**characterised in that**
the radial thickness of at least part of the outer seat (53) varies axially in such manner that the radially inner wall (60) of the said outer seat (53) is cylindrical and the said radially outer wall (59) of the said shoulder (48) of the said disc has a cylindrical geometry.

12. Wheel (20, 28, 30, 36, 40, 45, 50, 55) according to any of Claims 1 to 11, in which the thickness variation between the radially outer frustoconical wall and the radially inner cylindrical wall (27, 60) of the outer seat (5) or of the said part (53) of the outer seat of the said rim (21, 31, 41, 51) is produced by a flow spinning operation.

13. Wheel (20, 28, 30, 36, 40, 45, 50, 55) according to any of Claims 1 to 12, in which the thickness of the said rim (21, 31, 41, 51) is smaller in the zone located between the outer side-wall (8) of the mounting groove (7) and the inner rim flange (10, 57), compared with the thickness of the other parts of the said rim, and in which the said thickness variation is produced by cylindrical flow spinning operations.

14. Wheel (20, 28, 30, 36, 40, 45, 50, 55) according to any of Claims 1 to 13, in which the angle of inclination α is 5°.

15. Process for the production of a vehicle wheel (20, 28, 30, 36, 40, 45), in which:
• a sheet metal rim (21, 31, 41) is produced by means of the following steps:
- a plate of sheet metal is cut out to obtain rectangular geometry;
- the plate is bent to produce a cylindrical sleeve (70);
- the two free edges of the sleeve (7) are welded together;
- the sleeve is calibrated to a given diameter;
- at least one cylindrical flow spinning operation is carried out to obtain a given profile of the thickness of the sleeve (84, 90, 100, 110), in particular comprising in the zone (92, 102, 112) intended to constitute the outer seat (5) an angle of inclination α relative to the axial direction;
- the sleeve is then shaped to obtain the rim, in particular with a radially inner cylindrical wall in the zone of the outer seat and with a radially outer frustoconical wall inclined at an angle α corresponding to the standard inclination of the rim seats of the said rim; and
- the said rim is then calibrated;
• a disc (22, 32, 42) is made, having an assembly edge (26, 35, 43) whose radially outer surface (27) has a cylindrical geometry;
• the said rim and the said disc are assembled by fitting together under the outer seat (5) of the rim; and
• the said assembly is welded together.

16. Process according to Claim 15, in which the disc (22, 32, 42) is a metal plate made by stamping and flattening the outer edge to obtain a cylindrical assembly edge (26, 35, 43).

17. Process according to Claim 15, in which the disc is made by casting.

18. Process according to any of Claims 15 to 17, in which the disc is spot welded to the rim.
